# EUROPEAN PATENT APPLICATION

(11) **EP 1 220 480 A1**
(43) Date of publication of application: **03.07.2002**
(21) Application number: 00957020.1
(22) Date of filing: 07.09.2000
(51) Int. Cl.: H04J 13/00, H04L 29/06

(54) **DATA COMMUNICATION METHOD, BIDIRECTIONAL DATA COMMUNICATION METHOD, DATA COMMUNICATION SYSTEM, BIDIRECTIONAL DATA COMMUNICATION SYSTEM, DATA TRANSMITTER, AND DATA RECEIVER**

(30) Priority: 14.09.1999 JP 25990899; 01.12.1999 JP 34165599
(71) Applicant: Sharp Kabushiki Kaisha, Osaka-shi, Osaka 545-8522 (JP)
(72) Inventor: Nishimura, Takashi, Purasupa Toyoi 101, Tenri-shi, Nara 632-0013 (JP); Imanishi, Seizi, Raporu Tenri 521, Tenri-shi, Nara 632-0004 (JP); Takahashi, Masafumi, Akebono-ryo 961, Tenri-shi, Nara 632-0004 (JP); Sumi, Kazuyuki, Oriento Nara 605, Nara-shi, Nara 630-8357 (JP); Ichikawa, Yuji, Raporu Tenri 803, Tenri-shi, Nara 632-0004 (JP); Nakano, Daisuke, Raporu Tenri 406, Tenri-shi, Nara 632-0004 (JP); Ueda, Toru, 2-12-1-1, Umemidai, Soraku-gun, Kyoto 619-0200 (JP)
(74) Representative: Müller - Hoffmann & Partner
(86) International application number: JP0006114
(87) International publication number: WO0120833

(57) **Abstract**

Data to be transmitted is represented by a time interval interposed between specific sequences. A receiving end detects the specific sequence by calculating correlation between a received sequence and the specific sequence. The receiving end thus obtains the time interval representing the data, whereby the data can be restored. By using a sequence having a sharp autocorrelation function as the specific sequence and selecting an appropriate threshold value of correlation, the specific sequence can be detected even if the received sequence has an error. Moreover, synchronous communication can be realized.

## Description

### Technical Field

The present invention relates to a data communication method, bidirectional data communication method, data communication system, bidirectional data communication system, data transmitting device, and data receiving device. More particularly, the present invention relates to a data communication method, bidirectional data communication method, data communication system, bidirectional data communication system, data transmitting device, and data receiving device for conducting data communication by using a single-core optical fiber as a transmission medium.

### Background Art

A bidirectional transmission method using a single-core optical fiber includes a full-duplex transmission method and a half-duplex transmission method. The full-duplex transmission method is a method in which both terminal devices always transmit and receive simultaneously. In contrast, the half-duplex transmission method is a method in which both terminal devices do not transmit and receive simultaneously, but the transmission direction is switched with time. A method for switching the transmission direction includes a method in which transmission/reception is switched based on a predetermined time slot assigned to each terminal device for transmission, a method in which transmission/reception is switched by handing over a transmission right upon transmission, and the like.

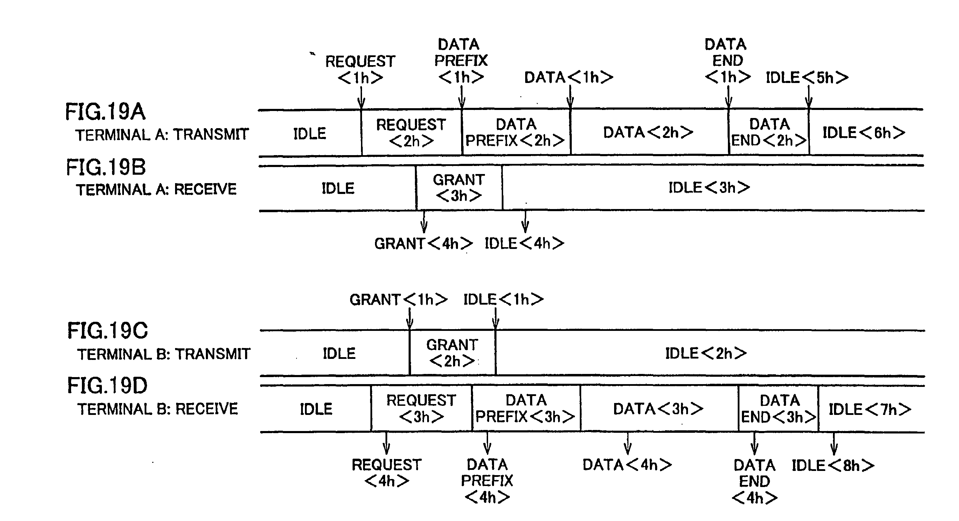

First, an example in which a signal according to IEEE Std. 1394-1995 and additional standards thereof (hereinafter, referred to as IEEE 1394) is transmitted by the full-duplex transmission method will be described with reference to Figs. 19A to 19D.

In Figs. 19A to 19D, it is assumed that two terminal devices A and B are connected to a transmission path and the terminal device A as a leaf node transmits data after outputting a request for transmission. In Figs. 19A to 19D, time passes from left to right.

Fig. 19A shows a signal transmitted from the terminal device A. The downward arrows above the figure indicate that a request to transmit a bus arbitration signal and packet data indicated at the bottom of the arrows is output from an upper layer of the terminal device A at the corresponding timing.

Fig. 19B shows a signal received by the terminal device A. This signal corresponds to a signal from the terminal device B in Fig. 19C delayed by a transmission delay. The downward arrows below Fig. 19B indicate that the head of a bus arbitration signal and packet data indicated at the top of the arrows is transmitted to the upper layer of the terminal device A at the corresponding timing.

Fig. 19C shows a signal transmitted from the terminal device B. The downward arrows above Fig. 19C indicate that a request to transmit a bus arbitration signal and packet data indicated at the bottom of the arrows is output from an upper layer of the terminal device B at the corresponding timing.

Fig. 19D shows a signal received by the terminal device B. This signal corresponds to the signal from the terminal device A in Fig. 19A delayed by a transmission delay. The downward arrows below Fig. 19D indicate that the head of a bus arbitration signal and packet data indicated at the top of the arrows is transmitted to the upper layer of the terminal device B at the corresponding timing.

Operation will now be described in the order of events. First, a bus is in the IDLE state, that is, the state in which both terminal devices A and B transmit IDLE. The upper layer of the terminal device A as a leaf node then outputs a request for data transmission (REQUEST<1h>), and the terminal device A transmits REQUEST<2h>. The terminal device B receives REQUEST<2h> from the terminal device A after transmission delay time in the transmission path, and REQUEST<4h> is transmitted to the upper layer of the terminal device B. The upper layer of the terminal device B as a root node then outputs a permission (GRANT<lh>) in response to the request for data transmission (REQUEST<1h>) from the terminal device A, and the terminal device B transmits GRANT<2h>.

When the terminal device A receives GRANT<3h> from the terminal device B, GRANT<4h> is transmitted to the upper layer. The upper layer in turn outputs a data prefix signal (DATA PREFIX<1h>) in place of REQUEST. Therefore, the terminal device A transmits DATA PREFIX<2h>.

The terminal device B then receives DATA PREFIX<3h> from the terminal device A and transmits it to the upper layer. The upper layer in turn outputs IDLE<1h> in place of GRANT, and the terminal device B transmits IDLE<2h>. The terminal device B thus enters a data receiving mode. After outputting DATA PREFIX<2h> for a prescribed time, the terminal device A transmits packet data (DATA<2h>) requested from the upper layer. After packet data transmission is completed, the upper layer outputs a data postfix signal (DATA END<1h>), and the terminal device A transmits DATA END<2h>. Thereafter, the upper layer outputs IDLE<5h>, and the terminal device A transmits IDLE<6h>.

On the other hand, the terminal device B in the receiving mode transmits DATA<4h>, DATA END<4h>, IDLE<8h> following DATA PREFIX<4h> to the upper layer thereof. By the above steps, data is transmitted form the upper layer of the terminal device A to the upper layer of the terminal device B, and the signals transmitted from the terminal devices A and B both return to the original state IDLE.

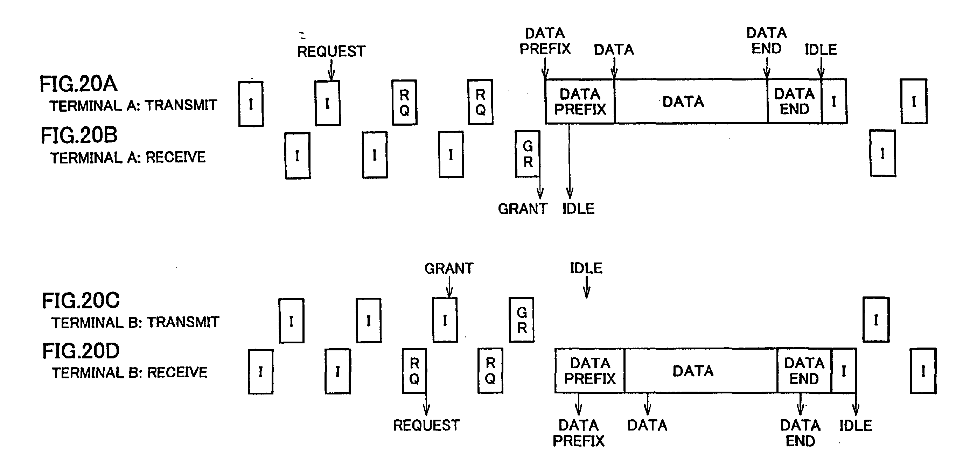

Figs. 20A to 20D show an example in which a signal according to IEEE1394 is transmitted by the half-duplex transmission method. In Figs. 20A to 20D, it is assumed that the terminal device A transmits data after outputting REQUEST, as in the case of the above full-duplex transmission method. Note that, in Figs. 20A to 20D, I indicates IDLE, RQ indicates REQUEST, and GR indicates GRANT. The process flow as viewed from the upper layers of the terminal devices A and B is completely the same as that in the above full-duplex method. However, the half-duplex transmission method is different from the full-duplex transmission method in the following points.

First, a signal transmitted from the terminal devices A and B is a burst signal rather than a continuous signal, and the terminal devices A and B do not transmit simultaneously. Second, even if a request to transmit an arbitration signal is output from the upper layer, the corresponding terminal device, if it has no transmission right, cannot immediately transmit the arbitration signal, and has to wait until it acquires the transmission right. In the worst case, actual transmission is started with a delay of one cycle.

Third, a transmission right will not be transferred during data transmission (actually, from the start of transmission of DATA PREFIX until the end of transmission of IDLE after DATA END). During this period, the terminal device A is in the transmitting mode and the terminal device B is fixed to the receiving mode. As a result, the terminal device B cannot transmit IDLE in place of GRANT. Therefore, the terminal device A itself must transmit to the upper layer thereof IDLE that is supposed to be received from the terminal device B.

In the full-duplex transmission mode, each terminal device receives the light transmitted from the other terminal device. At this time, each terminal device may simultaneously receive the light transmitted from the terminal device itself due to the reflection by the optical fiber, thereby degrading the error rate of the received signal. Such reflection by the optical fiber is divided into two types: proximal-end reflection, reflection from the end face of the optical fiber located at the former terminal device; and distal-end reflection, reflection from the end face of the optical fiber located at the latter terminal device. Such reflected light can be reduced by using an optical system in an ingenious manner like shaping the end face of the optical fiber so that the end face is less likely to be subjected to reflection, or covering the end face of the optical fiber with a special coating for suppressing reflection. However, this results in increased costs.

When a single-core optical fiber is used in a transmission path, arranging a transmitting section and a receiving section close to each other increases a chance for electromagnetic noise to be introduced from the transmitting section to the receiving section, resulting in a degraded error rate of the received signal. Arranging the transmitting section and the receiving section away enough to be free from the electromagnetic noise requires large space, which goes against the space saving, i.e., one of the main advantages of a single-core optical fiber over a double-core optical fiber. Therefore, such arrangement is not practical.

One way to improve the error rate of the received signal resulting from reflected light and electromagnetic noise is to add an error correcting code. However, the transmission rate is increased by the amount of codes added. Otherwise, the transmission band available for data transmission is reduced.

In the half-duplex transmission method, transmission and reception will not occur simultaneously. Therefore, neither the reflected light nor the electromagnetic noise introduced from the transmitting section to the receiving section need be considered. However, transmission can not always be started immediately, causing increased transmission delay and variation in delay amount. Such increased transmission delay results in a reduced transmission band.

The following attempts have been made in order to implement bidirectional full-duplex communication based on a single wavelength by using a single-core optical fiber. First, communication is conducted by using devices having sufficiently low reflection of transmitted light from the end face of the optical fiber and sufficiently low electromagnetic noise from the transmitting section to the receiving section. Communication is also conducted by using an error correcting code having redundancy required to implement the target error rate.

However, these attempts have the following problems: Reducing the error-generation rate to such a value as not to prevent the communication results in increased costs for the communication devices. Communication using an error correcting code requires code synchronization, and therefore requires a separate mechanism for accurate synchronization. Accordingly, in a serial communication path having a high error-generation rate, data transmission must be conducted while efficiently obtaining synchronization with high accuracy. One example of this is a spread spectrum communication method for multiplex communication. When the spread spectrum communication method is applied to a serial communication path, data communication is conducted by representing 1 bit by an inverted state of a specific sequence. In this case, bit synchronization is obtained by detecting the specific sequence, but a mechanism for synchronizing a symbol (indivisible, minimum unit of information) is required.

One possible way to prevent synchronization of a symbol from being conducted separately in the spread spectrum communication method is to collectively transmit a symbol over a plurality of multiplexed channels. More specifically, provided that the transmitting end simultaneously transmits the bits of a symbol over a plurality of channels, the receiving end can simultaneously receives those bits of the symbol. Accordingly, the symbol can be determined as long as bit synchronization is accomplished.

As a method for implementing multiplex communication using the spread spectrum communication method in a serial communication path, Japanese Laid-Open Publication No. 8-130526 discloses a multiplexing method in the spread spectrum communication. The multiplexing method in the spread spectrum communication described in Japanese Laid-Open Publication No. 8-130526 is characterized by a spread code sequence used for spreading and a method for determining the spread code sequence. The spread code sequence used for spreading is represented by a plurality of specific sequences shorter than the spread code sequence and a pattern of combination of time intervals inserted therebetween. By calculating correlation between the received signal and the specific sequence, the receiving end detects the specific sequence and the time interval between the specific sequences, and thus detects the spread code sequence.

In the spread spectrum communication, a specific pattern of combination of time intervals inserted between a plurality of specific sequences is assigned to each transmitting end so that a transmitting station of the received data is specified. Multiplexing can thus be realized. In this case, multiplexing can also be implemented in a serial communication path by selecting for each channel a plurality of specific sequences and a pattern of time intervals inserted therebetween so that the specific sequences in a plurality of channel signals do not interfere with each other (for example, so that the specific sequences are generated at different timings).

By multiplexing the bits of a symbol of the data, communication with symbol synchronization can be conducted in a serial communication path without requiring any separate mechanism.

In the following description, a sequence of a continuous signal received by a receiver is referred to as a received sequence, and a sequence of a continuous part of the received sequence having the same length as that of the specific sequence is referred to as a partial received sequence. Information regarded as one piece such as a character code is referred to as a symbol.

The multiplexing method in the spread spectrum communication described in the above Japanese Laid-Open Publication No. 8-130526 is applied to a serial communication path on the assumption that a plurality of specific sequences and a pattern of combination of time intervals inserted therebetween are assigned to each transmitting end, and 1 bit is represented by an inverted state of the specific sequence.

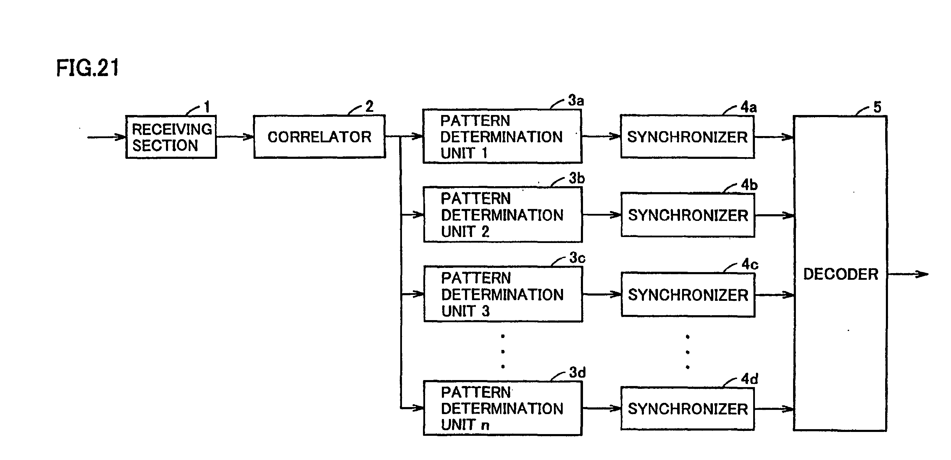

Accordingly, in the case where the bits of a symbol are multiplexed rather than the data transmitted from each transmitting end, the receiver has the structure shown in Fig. 21. In Fig. 21, the receiver includes a receiving section 1, a correlator 2, pattern determination units 3a to 3d, synchronizers 4a to 4d, and a decoder 5. The receiving section 1 receives a transmitted code sequence and applies it to the correlator 2. By detecting whether correlation between the most recent partial received sequence of the received sequence and the specific sequence exceeds a threshold value or not, the correlator 2 detects a specific sequence and outputs a detection signal.

The pattern determination units 3a to 3d each determines the inverted state of the respective time interval pattern between detection signals. The time interval patterns respectively correspond to the bits of the received symbol. When the time interval patterns respectively corresponding to the bits are different in length, the pattern determination units 3a to 3d output the output values at different timings. In this case, the synchronizers 4a to 4d synchronize the respective output values of the pattern determination units 3a to 3d in order to accurately determine the symbol. The decoder 5 determines the transmitted symbol based on the output values of the pattern determination units 3a to 3d, and transmits it to an upper layer.

The data communication system based on the above related art thus requires for the receiver the pattern determination units 3a to 3d and the synchronizers 4a to 4d corresponding to the number of bits of a symbol, resulting in increase in size. If the time interval patterns corresponding to the respective bits have the same length and the receiving end detects every bit value at the same timing, the synchronizers 4a to 4d are not required. However, since the time interval patterns corresponding to the respective bits have a fixed length, shorter timing interval patterns cannot be used for a frequently-appearing symbol, thereby reducing the data transmission rate.

It is therefore a primary object of the present invention to provide a data communication method, bidirectional data communication method, data communication system, bidirectional data communication system, data transmitting device, and data receiving device for conducting data transmission while suppressing reduction in transmission band without burdening an optical system and without increasing the transmission rate.

It is another object of the present invention to provide a data communication method, bidirectional data communication method, data communication system, bidirectional data communication system, data transmitting device, and data receiving device suitable for accurately transmitting a symbol over a communication path in which an error is generated, particularly when there are only a small number of types of symbols.

### Disclosure of the Invention

In a data communication method according to the present invention, data to be transmitted is represented by a time interval, and the data represented by the time interval is interposed between first specific sequences for transmission. The first specific sequence has a sharp autocorrelation function.

Thus, according to the present invention, accurate communication can be conducted in a serial communication path with a high error-generation rate without requiring a separate synchronization mechanism, thereby simplifying the structure of a receiver for receiving data. The time interval can be detected by calculating correlation between a partial received sequence extracted from a received sequence and a specific sequence. More specifically, whether the correlation exceeds a threshold value or not is determined. A time interval representing a symbol can be detected based on the time interval between detection signals generated in response to detection of a specific sequence from the received sequence. By selecting an appropriate threshold value, accurate, synchronous communication can be conducted even in a communication path having a high error-generation rate. Moreover, unlike the case where a multiplexing method in the spread spectrum communication is applied, a plurality of pattern determination units are not required. Therefore, data communication can be conducted with a simple configuration. By representing a frequently appearing symbol by a short time interval, the data transfer rate can be improved.

The first specific sequence having a sharp autocorrelation function and a second specific sequence having a specific relation with the first specific sequence may be used as a sequence of the data represented by the time interval. In embodiments, the time interval interposed between the first specific sequences is referred to as a gap, and the second specific sequence transmitted in the gap is referred to as a gap sequence.

A binary sequence may be used as the first specific sequence and the second specific sequence, and the time interval may be set on a bit basis. This enables application to duplex communication using an optical fiber or the like.

A specific sequence formed from a combination of a first logic and a second logic different from the first logic, and a code corresponding to the specific sequence having the first logic and the second logic inverted may be used as the first specific sequence, and the specific sequence, an inverted sequence thereof, and the time interval representing the data to be transmitted may be transmitted in combination. Thus, the maximum bit length and the average bit length required to transmit a single symbol can be reduced, allowing for an improved data transmission rate. Note that, in embodiments, inverting each bit "1", "0" of the specific sequence is referred to as "inverting the specific sequence". Moreover, when a transmitting end transmits a non-inverted specific sequence, a receiving end generates a detection signal "+1" based on correlation with the specific sequence. When the transmitting end transmits an inverted specific sequence, the receiving end generates a detection signal "-1" based on correlation with the specific sequence.

Two communication paths may be included for bidirectional communication. The first specific sequence may be used in one communication path, and a code corresponding to the first specific sequence having each logic inverted may be used in the other communication path. As a result, when the two communication paths are likely to generate crosstalk to each other, the probability that the detection signal is erroneously generated can be reduced as compared to the case where the same specific sequence is used in both communication paths.

A pseudo-noise sequence (PN code) may be used as the first specific sequence. This enables accurate detection of the specific sequence in the received sequence.

A Barker sequence may be used as the first specific sequence. The Barker sequence significantly correlates with the Barker sequence itself and an inverted sequence thereof. Therefore, the Barker sequence is suitable as a specific sequence in a communication method in which a symbol is represented by combination of a time interval interposed between the specific sequences and inversion/non-inversion of the specific sequence.

The number of corresponding bits having a same value minus the number of corresponding bits having different values in a partial received sequence and the first specific sequence may be used as correlation therebetween. The partial received sequence is obtained by extracting from a received sequence a continuous part having a same length as that of the first specific sequence. This facilitates correlation calculation and also enables mounting of digital circuitry.

A = 11100010010 and a sequence having each bit of A inverted, i.e., B = 00011101101, may be used as the first specific sequence. When A is followed by A, 1, 11, 110, 1101 are partially or entirely used as a 1 to 4-bit second specific sequence interposed therebetween; when A is followed by B, 1, 10, 100, 1001 are partially or entirely used as a 1 to 4-bit second specific sequence interposed therebetween; when B is followed by B, 0, 00, 001, 0010 are partially or entirely used as a 1 to 4-bit second specific sequence interposed therebetween; and when B is followed by A, 0, 01, 011, 0110 are partially or entirely used, whereby ten types of information are transmitted.

A = 1011000 and a sequence having each bit of A inverted, i.e., B = 0100111, may be used as the first specific sequence. When A is followed by A, 1, 11, 111, 1110 are partially or entirely used as a 1 to 4-bit second specific sequence interposed therebetween; when A is followed by B, 0, 00, 000, 0001 are partially or entirely used as a 1 to 4-bit second specific sequence interposed therebetween; when B is followed by B, 0, 00, 000, 0001 are partially or entirely used as a 1 to 4-bit second specific sequence interposed therebetween; and when B is followed by A, 1, 11, 111, 1110 are partially or entirely used, whereby ten types of information are transmitted.

These sequences are specifically selected so that the specific sequence is advantageously detected from the received sequence based on correlation between the partial received sequence and the specific sequence. This enables application to arbitration of high-speed serial bus communication according to IEEE Std 1394 in which nine types of states are transmitted.

According to another aspect of the present invention, in a data communication system for representing data to be transmitted by a time interval, and interposing the data represented by the time interval between first specific sequences for transmission between a transmitter and a receiver, the first specific sequence has a sharp autocorrelation function, and the transmitter includes a converting means for converting the data to be transmitted into the time interval, a storage means for storing the first specific sequence, and a transmitting means for interposing the thus-obtained time interval between the first specific sequences stored in the storage means for transmission. The receiver includes a detection signal generating means for detecting the first specific sequence in a received sequence by detecting whether correlation between a partial received sequence and the first specific sequence exceeds a threshold value or not, and generating a detection signal at a corresponding timing, the partial received sequence being obtained by extracting from the received sequence a continuous part having a same length as that of the first specific sequence, and a restoring means for restoring data based on a time interval between detection signals from the detection signal generating means minus the length of the first specific sequence.

According to still another aspect of the present invention, a bidirectional data communication system for representing data to be transmitted by a time interval, and transmitting in combination the data represented by the time interval, a first specific sequence having a sharp autocorrelation function, and a second specific sequence having a specific relation with the first specific sequence includes two communication paths for bidirectional communication. The first specific sequence is used in one communication path, and the second specific sequence is used in the other communication path. As a result, a reliable bidirectional communication system can be configured.

According to yet another aspect of the present invention, a data transmitting device for representing data to be transmitted by a time interval and interposing the data represented by the time interval between first specific sequences for transmission, the first specific sequence having a sharp autocorrelation function, includes: a converting means for converting data to be transmitted into the time interval; a storage means for storing the first specific sequence; and a transmitting means for interposing the thus-obtained time interval between the first specific sequences stored in the storage means for transmission.

According to a further aspect of the present invention, in a data receiving device for receiving a received sequence, the received sequence is formed from a time interval representing data to be transmitted and first specific sequences interposing the time interval therebetween, and the first specific sequence has a sharp autocorrelation function. The data receiving device includes a detection signal generating means for detecting the first specific sequence in the received sequence by detecting whether correlation between a partial received sequence and the first specific sequence exceeds a threshold value or not, and generating a detection signal at a corresponding timing. The partial received sequence is obtained by extracting from the received sequence a continuous part having a same length as that of the first specific sequence. The data receiving device further includes a restoring means for restoring data based on a time interval between detection signals from the detection signal generating means minus the length of the first specific sequence.

The data receiving device may further include a means for varying the threshold value. As a result, when a specific sequence was correctly detected in the received sequence, the subsequent specific sequence will not be detected at least during a period shorter than the specific sequence length by 1 bit. In other words, the probability of detection of a specific sequence in the received sequence varies with time since detection of the previous specific sequence. Accordingly, the probability of erroneous detection of a specific sequence in the received sequence can be reduced.

The number of corresponding bits having a same value minus the number of corresponding bits having different values in a partial received sequence and the first specific sequence may be used as correlation therebetween. The partial received sequence is obtained by extracting from the received sequence a continuous part having a same length as that of the first specific sequence. A = 11100010010 and a sequence having each bit of A inverted, i.e., B = 00011101101, maybe used as the first specific sequence. When A is followed by A, 1, 11, 110, 1101 are partially or entirely used as a 1 to 4-bit second specific sequence interposed therebetween; when A is followed by B, 1, 10, 100, 1001 are partially or entirely used as a 1 to 4-bit second specific sequence interposed therebetween; when B is followed by B, 0, 00, 001, 0010 are partially or entirely used as a 1 to 4-bit second specific sequence interposed therebetween; and when B is followed by A, 0, 01, 011, 0110 are partially or entirely used. The threshold value is set to 10 and -10 in a period shorter than the length of the first specific sequence by 1 bit after generation of the detection signal, and is otherwise set to 6 and -6. As a result, accurate data communication can be realized as long as any 11-bit sequence extracted from the received sequence has an error of 2 bits or less.

The number of corresponding bits having a same value minus the number of corresponding bits having different values in a partial received sequence and the first specific sequence may be used as correlation therebetween. The partial received sequence is obtained by extracting from the received sequence a continuous part having a same length as that of the first specific sequence. A = 1011000 and a sequence having each bit of A inverted, i.e., B = 0100111, may be used as the first specific sequence. When A is followed by A, 1, 11, 111, 1110 are used as a 1 to 4-bit second specific sequence interposed therebetween; when A is followed by B, 0, 00, 000, 0001 are used as a 1 to 4-bit second specific sequence interposed therebetween; when B is followed by B, 0, 00, 000, 0001 are used as a 1 to 4-bit second specific sequence interposed therebetween; and when B is followed by A, 1, 11, 111, 1110 are used, whereby ten types of information are transmitted. The threshold value is set to 6 and -6 in a period shorter than the length of the first specific sequence by 1 bit after generation of the detection signal, and is otherwise set to 4 and -4. As a result, accurate data communication can be realized as long as any 7-bit sequence extracted from the received sequence has an error of 1 bit or less.

According to a still further aspect of the present invention, in a bidirectional data communication system including at least two terminal devices connected on a one-to-one basis through a transmission path of a single-core optical fiber, for transmitting and receiving data, each of the terminal devices includes a full-duplex encoding means for conducting encoding operation in a full-duplex transmission mode in which input packet data is always transmitted and received simultaneously, a half-duplex encoding means for conducting encoding operation in a half-duplex transmission mode in which a transmission direction (transmission and reception) of the input packet data is switched with time, a selector for selecting an output of the full-duplex encoding mean and an output of the half-duplex encoding means, a transmitting means for transmitting an output of the selector to one terminal device through the optical fiber, a communication control means for switching the selector and applying an input arbitration signal and input packet data to the full-duplex encoding means and the half-duplex encoding means to control an output to the other terminal device, an upper layer for outputting an arbitration signal and packet data to the communication control means according to a protocol and receiving an arbitration signal and packet data from the communication control means, a receiving means for receiving information transmitted from the other terminal device through the optical fiber, a full-duplex decoding means for decoding an arbitration signal and packet data based on the information received by the receiving means for output to the communication control means, and a half-duplex decoding means for decoding an arbitration signal and packet data based on the information received by the receiving means for output to the communication control means. Full-duplex communication is used for arbitration of transmission, and half-duplex communication is used for data transmission. As a result, a bidirectional data communication system for transmitting data while suppressing reduction in transmission band without burdening an optical system and without increasing the transmission rate can be realized.

The full-duplex decoding means may have an error correcting function that works only in full-duplex transmission, whereby an error rate resulting from electromagnetic coupling noise is improved.

A handled frequency may be reduced by reducing a transmission rate only in the full-duplex transmission, whereby an error rate is improved.

In the full-duplex transmission, one terminal device may transmit continuously or intermittently and the other terminal device may transmit intermittently, whereby power consumption for transmission of the intermittently transmitting terminal device is reduced.

The terminal devices may use different light wavelengths for transmission so as to prevent a signal transmitted from the terminal device itself from being mixed with a signal received by that terminal device, whereby an error rate is improved.

The terminal devices may use different modulation methods for transmission so as to enable full-duplex transmission through a single optical fiber.

The terminal devices enable transmission according to IEEE 1394 on the transmission path.

### Brief Description of the Drawings

Fig. 1 is a block diagram of a bidirectional data communication system according to a first embodiment of the present invention.
Figs. 2A to 2D are timing charts illustrating operation of the bidirectional data communication system in Fig. 1.
Fig. 3 is a flowchart illustrating operation of switching the transmission mode between a full-duplex transmission mode and a half-duplex transmission mode in the embodiment of Fig. 1.
Figs. 4A to 4D are timing chart illustrating operation of the case where one terminal device transmits continuously and the other terminal device transmits intermittently in the full-duplex transmission mode in a second embodiment of the present invention.
Figs. 5A to 5D are timing charts illustrating operation of the case where one terminal device transmits continuously and the other terminal device transmits intermittently.
Fig. 6 shows a transmitted sequence and correlation in a received sequence according to a third embodiment of the present invention.
Fig. 7 is a block diagram showing the structure of a transmitter according to the third embodiment of the present invention.
Fig. 8 is a block diagram showing the structure of a receiver according to the third embodiment of the present invention.
Figs. 9A to 9E are timing charts illustrating operation of the transmitter in Fig. 7.
Figs. 10A to 10E are timing charts illustrating operation of the receiver in Fig. 8.
Fig. 11 is a block diagram showing the structure of a transmitter according to a fourth embodiment of the present invention.
Fig. 12 is a block diagram showing the structure of a receiver according to the fourth embodiment of the present invention.
Fig. 13 shows a transmitted code sequence and correlation in a received code sequence.
Fig. 14 is a block diagram showing the structure of a transmitter using a data representation method according to a fifth embodiment of the present invention.
Fig. 15 is a block diagram showing the structure of a receiver using the data representation method according to the fifth embodiment of the present invention.
Fig. 16 is a block diagram showing the structure of a transmitter using a data representation method according to a sixth embodiment of the present invention.
Fig. 17 is a block diagram showing the structure of a receiver using the data representation method according to the sixth embodiment of the present invention.
Fig. 18 shows a change in correlation and a corresponding threshold value for a given sequence according to the sixth embodiment of the present invention.
Figs. 19A to 19D are timing charts illustrating operation in a conventional full-duplex transmission method.
Figs. 20A to 20D are timing charts illustrating operation in a conventional half-duplex transmission method.
Fig. 21 is a block diagram showing the structure of a receiver that is applied to conventional data communication in a serial communication path.

### Best Mode for Carrying Out the Invention

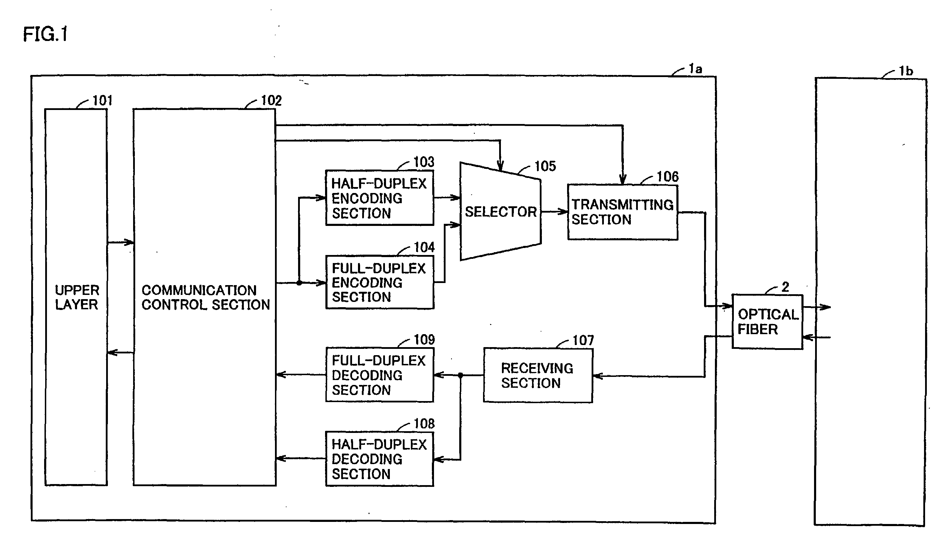

Fig. 1 is a block diagram showing the structure of a bidirectional data communication system according to a first embodiment of the present invention. In Fig. 1, bidirectional transmission devices 1a, 1b are connected to each other though an optical fiber 2 as a transmission path, so that communication is conducted over the optical fiber 2. Since the bidirectional transmission devices 1a, 1b have the same internal structure, illustration of the internal structure of one bidirectional transmission device 1b is omitted.

The bidirectional transmission device 1a includes an upper layer 101, a communication control section 102, a half-duplex encoding section 103, a full-duplex encoding section 104, a selector 105, a transmitting section 106, a receiving section 107, a half-duplex decoding section 108 and a full-duplex decoding section 109. An output from the transmitting section 106 of one bidirectional transmission device Ia or the other bidirectional transmission device 1b is transmitted to the receiving section 107 of the other bidirectional transmission device 1b or 1a. Note that the output of the transmitting section 106 may partially enter the receiving section 107 of that transmission device itself due to reflection from the end face of the optical fiber 2. However, this need not be considered particularly.

The upper layer 101 outputs an arbitration signal and packet data to the communication control section 102 according to a predetermined protocol like a signal according to IEEE 1394, and also receives an arbitration signal and packet data from the communication control section 102. The communication control section 102 for switching the transmission mode between a half-duplex transmission mode and a full-duplex transmission mode applies the arbitration signal and packet data received from the upper layer 101 to the half-duplex encoding section 103 and the full-duplex encoding section 104. The communication control section 102 also outputs the current transmission mode to switch the output of the selector 105. Moreover, the communication control section 102 outputs an output control signal for controlling ON/OFF of the output of the transmitting section 106, and receives respective outputs of the half-duplex decoding section 108 and the full-duplex decoding section 109. Based on the current transmission mode (half-duplex transmission mode or full-duplex transmission mode), the communication control section 102 selects one of those outputs as a received signal, and applies the selected output to the upper layer 101.

The half-duplex encoding section 103 for conducting encoding operation in the half-duplex transmission mode encodes the arbitration signal and packet data received from the communication control section 102 by using 4B5B conversion, 8B10B conversion or the like for output to the selector 105. Not that 4B5B conversion and 8B10B conversion are by way of example only, and another encoding method may alternatively be used.

The full-duplex encoding section 104 conducts encoding operation in the full-duplex transmission mode. In other words, the full-duplex encoding section 104 encodes the arbitration signal and packet data received from the communication control section 102 by using 4B5B conversion, 8B10B conversion or the like, and in some cases, adds an error correcting code such as Hamming code and Reed-Solomon code for output to the selector 105. Note that 4B5B conversion, 8B10B conversion, Hamming code and Reed-Solomon code are by way of example only, and another encoding method may alternatively be used.

Based on the current transmission mode received from the communication control section 102, the selector 105 selects either the output of the half-duplex encoding section 103 or the output of the full-duplex encoding section 104 as an output to the transmitting section 106. The transmitting section 106 includes a light-emitting element such as light emitting diode (LED) or laser diode (LD), and a driver circuit thereof, and if necessary, a modulation circuit. When the output control signal from the communication control section 102, the signal for controlling ON/OFF of the output, is ON, the transmitting section 106 modulates the encoded signal from the selector 105 as necessary for output to the optical fiber 2. When the output control signal is OFF, the transmitting section 106 does not output the encoded signal.

The present embodiment includes a single transmitting section 106. However, when different output characteristics are required for the half-duplex transmission mode and the full-duplex transmission mode, separate transmitting sections may be provided for the half-duplex transmission mode and the full-duplex transmission mode.

The receiving section 107 includes a light-receiving element and a receiver circuit thereof, and if necessary, a demodulation circuit. The receiving section 107 receives an optical signal from the optical fiber 2, and demodulates the received optical signal as necessary for output to the half-duplex decoding section 108 and the full-duplex decoding section 109. Note that the present embodiment also includes a single receiving section. However, when different input characteristics are required for the half-duplex transmission mode and the full-duplex transmission mode, separate receiving sections may be provided for the half-duplex transmission mode and the full-duplex transmission mode.

The half-duplex decoding section 108 conducts decoding operation in the half-duplex transmission mode. More specifically, the half-duplex decoding section 108 decodes the signal received from the receiving section 107 by using 5B4B conversion, 10B8B conversion or the like for output to the communication control section 102. Note that 5B4B conversion and 10B8B conversion are by way of example only, and another decoding method may be used as long as it is adapted to the encoding method used in the half-duplex encoding section 103.

The full-duplex decoding section 109 conducts decoding operation in the full-duplex transmission mode. More specifically, if the signal received from the receiving section 107 has an error correcting code such as Hamming code or Reed-Solomon code added thereto, the full-duplex decoding section 109 encodes, after error correction, the signal by using 5B4B conversion, 10B8B conversion or the like for output to the communication control section 102. The Hamming code, Reed-Solomon code, 5B4B conversion and 10B8B conversion are by way of example only, and another decoding method may be used as long as it is adapted to the error correcting code and the encoding method used in the full-duplex encoding section 104.

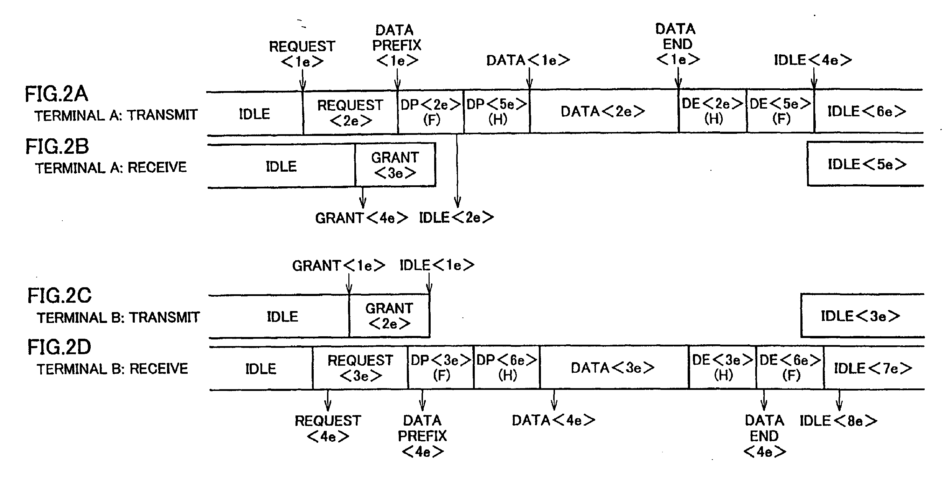

Figs. 2A to 2D illustrate operation of the bidirectional communication system in Fig. 1 in the case where a signal according to IEEE1394 is transmitted. In the illustrated example, the terminal device A transmits data after outputting REQUEST, as in the above conventional examples of the full-duplex transmission method and the half-duplex transmission method.

In Figs. 2A to 2D, DP(F) indicates DATA PREFIX in the full-duplex transmission mode, DP(H) indicates DATA PREFIX in the half-duplex transmission mode, DE(F) indicates DATA END in the full-duplex transmission mode, and DE(H) indicates DATA END in the half-duplex transmission mode. Figs. 2A to 2D show how the transmitted signal and received signal of each terminal device change with time. In Fig. 2A to 2D, time passes from left to right.

Fig. 2A shows a signal transmitted from the terminal device A. The downward arrows above Fig. 2A indicate that a request to transmit a bus arbitration signal and packet data indicated at the bottom of the arrows is output from an upper layer of the terminal device A at the corresponding timing. Fig. 2B shows a signal received by the terminal device A. This signal corresponds to a signal from the terminal device B in Fig. 2C delayed by a transmission delay. The downward arrows below Fig. 2B indicate that the head of a bus arbitration signal and packet data indicated at the top of the arrows is transmitted to the upper layer of the terminal device A at the corresponding timing.

Fig. 2C shows a signal transmitted from the terminal device B. The downward arrows above Fig. 2C indicate that a request to transmit a bus arbitration signal and packet data indicated at the bottom of the arrows is output from an upper layer of the terminal device B at the corresponding timing.

Fig. 2D shows a signal received by the terminal device B. This signal corresponds to the signal from the terminal device A in Fig. 2A delayed by a transmission delay. The downward arrows below Fig. 2D indicate that the head of a bus arbitration signal and packet data indicated at the top of the arrows is transmitted to the upper layer of the terminal device B at the corresponding timing.

Hereinafter, Figs. 2A to 2D will be described in detail in the order of time. First, in the initial state (left end), both terminal devices A and B transmit IDLE in the full-duplex transmission mode, and an IEEE1394 bus is in the IDLE state.

When the upper layer of the terminal device A outputs a request to start packet data transmission (REQUEST<le>), the terminal device A transmits REQUEST<2e> in the full-duplex transmission mode. When the terminal device B receives REQUEST<3e> from the terminal device A, REQUEST<4e> is transmitted to the upper layer of the terminal device B. In the case where the upper layer of the terminal device B serves to grant permission to transmit (GRANT) in response to REQUEST<4e> from the terminal device A, the upper layer of the terminal device B outputs GRANT<1e>, and the terminal device B transmits GRANT<2e> in the full-duplex transmission mode. When the terminal device A receives GRANT<3e> from the terminal device B, GRANT<4e> is transmitted to the upper layer of the terminal device A.

Since the upper layer of the terminal device A receives GRANT<4e> in response to REQUEST<1e> transmitted from the upper layer itself, the upper layer of the terminal device A changes REQUEST<2e> to a data prefix signal (DATA PREFIX<1e>), whereby the terminal device A transmits DATA PREFIX<2e> in the full-duplex transmission mode. When the terminal device B receives DATA PREFIX<3e> transmitted from the terminal device A in the full-duplex transmission mode, DATA PREFIX<4e> is transmitted to the upper layer of the terminal device B. The upper layer of the terminal device B responsively outputs IDLE<1e>. This IDLE<1e> means the packet data receiving mode. The terminal device B thus discontinues transmission in preparation for the packet data transmitted from the terminal device A in the half-duplex transmission mode.

After the terminal device A transmits DATA PREFIX<2e> in the full-duplex transmission mode for a prescribed time, the transmission mode is shifted to the half-duplex transmission mode, and the terminal device A transmits DATA PREFIX<5e> in the half-duplex transmission mode. Since the transmission mode is shifted to the half-duplex transmission mode, IDLE which is supposed to be transmitted from the terminal device B according to IEEE 1394 is not transmitted. Therefore, the terminal device A transmits IDLE<2e> to the upper layer thereof on the assumption that IDLE is transmitted.

After transmitting DATA PREFIX<5e> in the half-duplex transmission mode for a prescribed time, the terminal device A transmits the packet data (DATA<1e>) output from the upper layer thereof. The upper layer further outputs a data postfix signal (DATA END<1e>) before the packet data transmission is completed. Therefore, after DATA END<2e> is transmitted in the half-duplex transmission mode for a prescribed time, the transmission mode is shifted to the full-duplex transmission mode, and DATA END<5e> is transmitted in the full-duplex transmission mode for a fixed time.

The terminal device B receives DATA PREFIX<3e> transmitted in the full-duplex transmission mode as well as DATA PREFIX<6e>, DATA<3e> and DATA END<3d> transmitted in the half-duplex transmission mode, and transmits packet data (DATA<4e>) and DATA END<4e> to the upper layer thereof. Reception of DATA END<3e> in the half-duplex transmission mode indicates shifting to the full-duplex transmission mode. The terminal device B thus starts transmitting IDLE<3e> in the full-duplex transmission mode.

After transmitting DATA END<5e> in the full-duplex transmission mode, the terminal device A transmits IDLE<4e> output from the upper layer in the full-duplex transmission mode. By the above processing, both terminal devices A and B transmit IDLE<3e> and <6e> in the full-duplex transmission mode, whereby the IEEE1394 bus returns to the IDLE state.

In the full-duplex transmission mode, the received signal has a degraded error rate for the following reasons: the light transmitted from the terminal is reflected back from the end face of the optical fiber; and noise is introduced due to electromagnetic coupling between a driver and a receiver that must be arranged close to each other. Therefore, an error correcting code or the like is used to improve the error rate. For example, the use of a Hamming code enables error correction within 1 bit of 3-bit received data if a 3-bit error correcting code is added to 4-bit transmission data. Adding an error correcting code or the like reduces a substantial transmission rate, but only about by half. Therefore, such reduction in substantial transmission rate is less problematic when the full-duplex transmission mode is used only for transmission of an arbitration signal rather than transmission of data.

Another method to improve such degradation in error rate resulting from the reflected light from the end face of the optical fiber and the electromagnetic noise introduced from the transmitting section to the receiving section is for each connected terminal device to use a different modulation method for transmission and include a receiving section adapted to the modulation method of the other terminal device. Any combination of modulation methods may be used as long as an optical signal transmitted from one terminal device can be separated from that transmitted from the other terminal device. For example, an ASK modulation method may be used for the signal transmitted from each terminal device. In this case, each terminal device uses a different carrier frequency in ASK modulation.

One method to improve degradation in error rate resulting from the reflected light from the end face of the optical fiber is to prevent each terminal device from receiving reflection of the light transmitted therefrom. This is implemented as follows: by the communication control section 102, each connected terminal device is controlled to transmit light at a different wavelength so that it can selectively receive only the wavelength of the light transmitted from the other terminal device. A wavelength to be used must be adapted to the characteristics of an optical fiber used as a transmission path. For example, in the case of a plastic optical fiber based on polymethyl methacrylate, red (wavelength: around 650 nm) and yellow green (wavelength: around 570 nm) may be used.

One method to improve degradation in error rate resulting from the electromagnetic noise is to reduce the transmission rate only in the full-duplex transmission mode by using the communication control section 102. In this method, the frequency of a transmission signal is reduced since the influence of the electromagnetic noise is increased as the handled frequency is increased. Each of the above methods to improve the error rate may either be used alone or in combination.

In the half-duplex transmission mode, transmission can not always be started, resulting in an increased transmission delay. However, since a reduced transmission rate is used only for the data transmission after arbitration using the full-duplex transmission mode. Therefore, the transmission delay will not be increased.

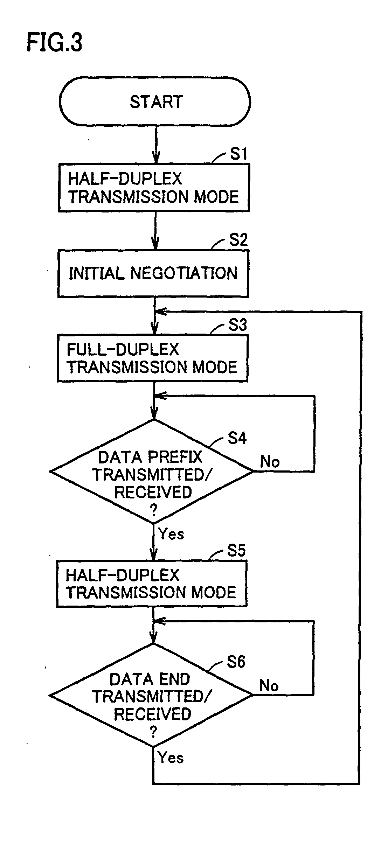

Fig. 3 is a flowchart illustrating an example of mode selection operation used in the transmission of a signal according to IEEE1394. The flow of Fig. 3 starts as soon as transmission is started. In step S1 (in the figure, "step" is simply referred to "S"), the transmission mode is set to the half-duplex transmission mode, and the flow proceeds to step S2. In step S2, initial negotiation is conducted. In the case where the full-duplex mode is implemented by using multiple light wavelengths or different modulation methods for transmission from the terminal devices, which terminal device uses which light wavelength or which modulation method is determined in the initial negotiation. In the case of IEEE1394 transmission, the parent-child relation between the terminal devices is determined at the Tree Identify phase using the half-duplex transmission mode. Therefore, by predetermining the respective light wavelengths or modulation methods to be used by the parent and child terminal devices, the light wavelength or modulation method to be used by each terminal device can be determined. When the determination is completed, the flow proceeds to step S3.

In step S3, the transmission mode is switched to the full-duplex transmission mode using the light wavelength or the modulation method determined in step S2, and the flow proceeds to step S4. In step s4, it is determined whether or not DATA PREFIX was transmitted or received in the full-duplex transmission mode. If DATA PREFIX was transmitted or received, the flow proceeds to step S5. Otherwise, step S4 is repeated.

In step S5, the transmission mode is shifted to the half-duplex transmission mode, and the flow proceeds to step S6. In step S6, it is determined whether or not DATA END was transmitted or received in the half-duplex transmission mode. If DATA END was transmitted or received, the flow returns to step S3. Otherwise, step S6 is repeated.

Hereinafter, a second embodiment will be described. In the first embodiment, only the output of the transmitting section 106 in Fig. 1 is switched ON/OFF by a current transmission mode. As in the second embodiment, however, every part that is not required in each transmission mode may be switched ON/OFF. Moreover, by causing one or both of the terminal devices to intermittently transmit in the full-duplex transmission mode, power consumption of the intermittently transmitting terminal device(s) can be reduced. This is particularly effective when the intermittently transmitting terminal device(s) is a mobile phone.

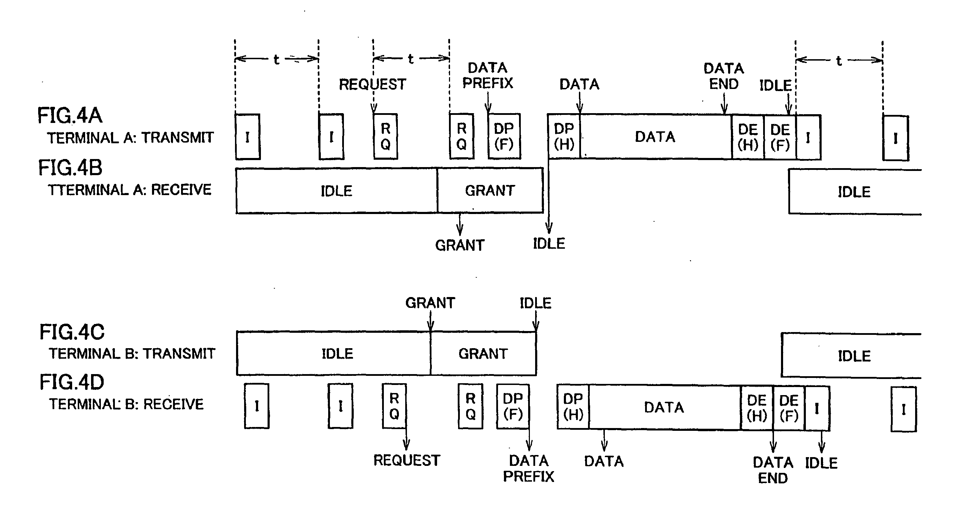

Figs. 4A to 4D are timing charts showing an example in which one terminal device transmits continuously and the other terminal device transmits intermittently. In the example of Figs. 4A to 4D, a signal according to IEEE1394 is transmitted, and the communication contents are the same as those in Figs. 2A to 2D. In Figs. 4A to 4D, I indicates a part of IDLE, RQ indicates REQUEST, DP(F) indicates DATA PREFIX in the full-duplex transmission mode, DP(H) indicates DATA PREFIX in the half-duplex transmission mode, DE(H) indicates DATA END in the half-duplex transmission mode, and DE(F) indicates DATA END in the full-duplex transmission mode.

The terminal device A shown in Figs. 4A and 4B is a child terminal device, and the terminal device B shown in Figs. 4C and 4D is a parent terminal device. In the full-duplex transmission mode, the parent terminal device B transmits continuously as shown in Fig. 4C, whereas the child terminal device A transmits at regular intervals t and every time a signal to be transmitted is changed, as shown in Fig. 4A. Power saving is thus achieved for transmission. The child terminal device A transmits at regular intervals t even when a signal to be transmitted is not changed. As a result, even if the child terminal device is stopped for some reason, the parent terminal device can detect such stopping of the child terminal device. In this example, only the child terminal device transmits intermittently as shown in Fig. 4A. However, the parent terminal device may also transmit intermittently like the child terminal device. In this case, both terminal devices may transmit at common regular intervals t, or may transmit at different regular intervals.

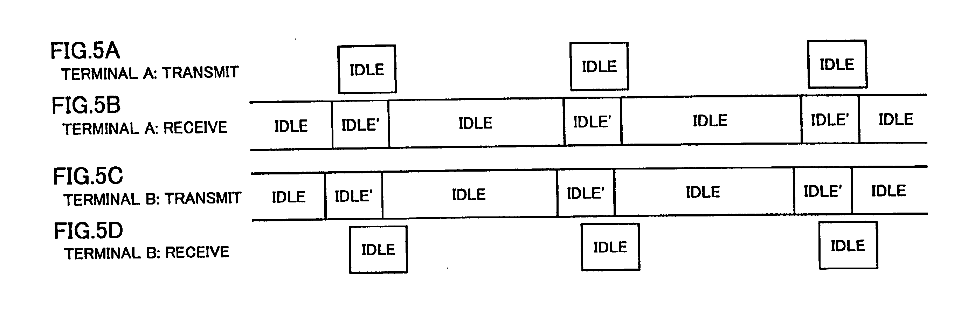

Figs. 5A to 5D are timing charts showing another example in which one terminal transmits intermittently. In this example, a signal to be output from both terminal devices in the full-duplex transmission mode remains IDLE. In the case where an IEEE1394 bus is less frequently used, a signal to be transmitted, i.e., a signal according to IEEE1394, remains IDLE as shown in Figs. 5A to 5D. In this example as well, the terminal device A is a child terminal device, and the terminal device B is a parent terminal device. The parent terminal device B transmits continuously as shown in Fig. 5C. In addition to normal IDLE, the parent terminal device B sometimes transmits a signal IDLE' requesting response from the child terminal device. As shown in Fig. 5A, the child terminal device A returns IDLE only when it receives IDLE' from the terminal device B. In this example, the child terminal device transmits intermittently and the parent terminal device transmits continuously. Alternatively, the parent terminal device may transmit intermittently and the child terminal device may transmit continuously.

The example in which one terminal device transmits continuously and the other terminal device transmits intermittently may be implemented either by one or both of the method of Figs. 4A to 4D and the method of Figs. 5A to 5D.

As described above, according to the present embodiment, data transmission can be conducted while suppressing reduction in transmission band without burdening the optical system and without increasing the transmission rate.

Hereinafter, a communication method suitable for accurately transmitting a symbol through a communication path in which an error is generated, particularly when there are only a small number of types of symbols will be described as a third embodiment.

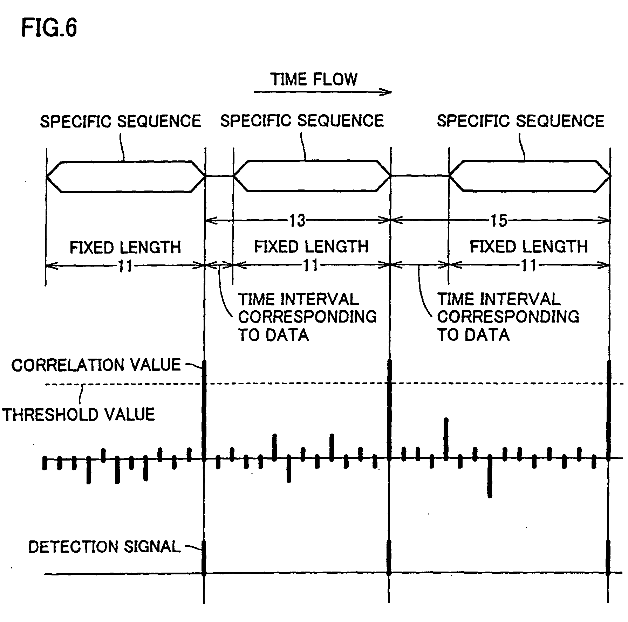

Fig. 6 shows a transmitted sequence and correlation in a received sequence in the third embodiment of the present invention. In Fig. 6, the third embodiment of the present invention is characterized by using a communication method in which data (symbol) to be transmitted is represented by the length of a time interval inserted between specific sequences. In this communication method, a time interval between specific sequences that represents a symbol to be transmitted can be detected by calculating correlation between a partial received sequence extracted from a received sequence in a receiver and a specific sequence. More specifically, as shown in Fig. 6, whether a correlation value exceeds a threshold value or not is determined. A time interval representing a symbol can be detected from the time interval between detection signals generated in response to detection of a specific sequence from the received sequence. By selecting an appropriate threshold value, accurate, synchronous communication can be conducted even in a communication path having a high error-generation rate.

Moreover, unlike the case where the method described in the above Japanese Laid-Open Publication No. 8-130526 is applied, a plurality of pattern determination units are not required, enabling data communication with a smaller configuration. Moreover, by representing a frequently appearing symbol by a short time interval, the data transmission rate can be improved.

Hereinafter, an embodiment to which this communication method is applied will be described. Note that, in the following example, a system for conducting bidirectional full-duplex transmission based on a single waveform by using a single-core optical fiber is applied to transmission of an arbitration signal of IEEE Std 1394. During an arbitration period of IEEE Std 1394, the terminal devices transmit nine types of states to each other. In other words, there are nine types of symbols. Accordingly, it is herein assumed that each state data is represented by a gap of 0 to 8 bits.

After arbitration is completed and data transmission is started, data transmission may be conducted by using a common coding method, e.g., NRZ. Since the data is transmitted in one direction, that is, the half-duplex communication, the error rate can be easily improved by using the optical system in an ingenious manner. In this example, a detection signal is generated when correlation between a specific sequence and a partial received sequence exceeds a threshold value. However, a detection signal may be generated when correlation is lower than the threshold value.

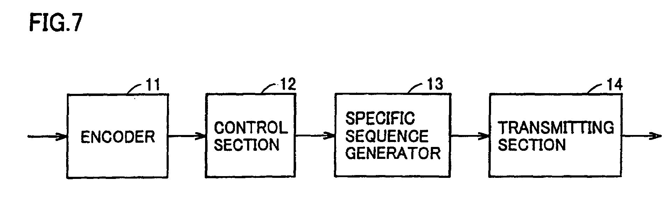

Fig. 7 is a block diagram showing an example of a transmitter used in the third embodiment of the present invention. In Fig. 7, the transmitter includes an encoder 11, a control section 12, a specific sequence generator 13, and a transmitting section 14. The encoder 11 converts the state received from the upper layer into time interval for output to the control section 12. The control section 12 measures the time until the gap matches the time interval, and then applies to the specific sequence generator 13 the timing of transmitting a specific sequence. The specific sequence generator 13 generates a specific sequence at the timing designated by the control section 12 for output to the transmitting section 14. The transmitting section 14 transmits the specific sequence received from the specific sequence generator 13 on a bit-by-bit basis according to a prescribed clock.

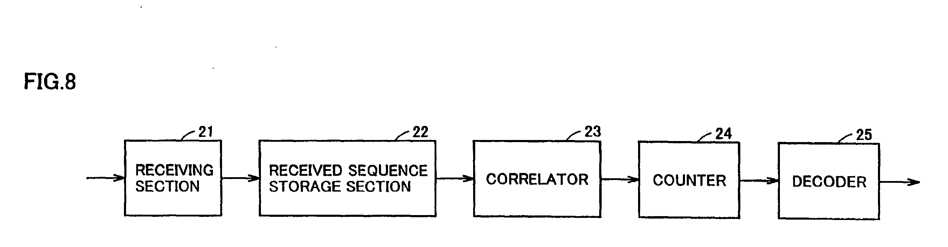

Fig. 8 is a block diagram showing a receiver used in the third embodiment of the present invention. In Fig. 8, the receiver includes a receiving section 21, a received sequence storage section 22, a correlator 23, a counter 24 and a decoder 25. The receiving section 21 receives the data from the transmitter of Fig. 7 on a bit-by-bit basis, and sequentially applies the received data to the received sequence storage section 22 on a bit-by-bit basis. The received sequence storage section 22 adds 1 bit received from the receiving section 21 to the received sequence, stores the most recent sequence by the same length as that of the specific sequence, and applies the stored sequence to the correlator 23 as a partial received sequence:

The correlator 23 calculates correlation between the partial received sequence from the received sequence storage section 22 and the specific sequence. If the correlation exceeds a preset threshold value, the correlator 23 outputs a detection signal to the counter 24. The counter 24 measures the time interval during which it receives no detection signal from the correlator 23. In response to the detection signal, the counter 24 applies to the decoder 25 a counter value indicating the time interval between the detection signals. The decoder 25 determines the state from the counter value received from the counter 24, and applies the determined state to the upper layer.

Note that if the detection signal is generated at time intervals shorter than the specific sequence, and if no detection signal is generated over the time longer than the sum of the specific sequence and the longest gap sequence, an error may be transmitted to the upper layer. In this case, the previous state may alternatively be transmitted to the upper state instead of the error.

Hereinafter, an example of the present embodiment in which an 11-bit sequence is used as a specific sequence and the values 4, 2, 0 are sequentially transmitted after the start of communication will be described specifically.

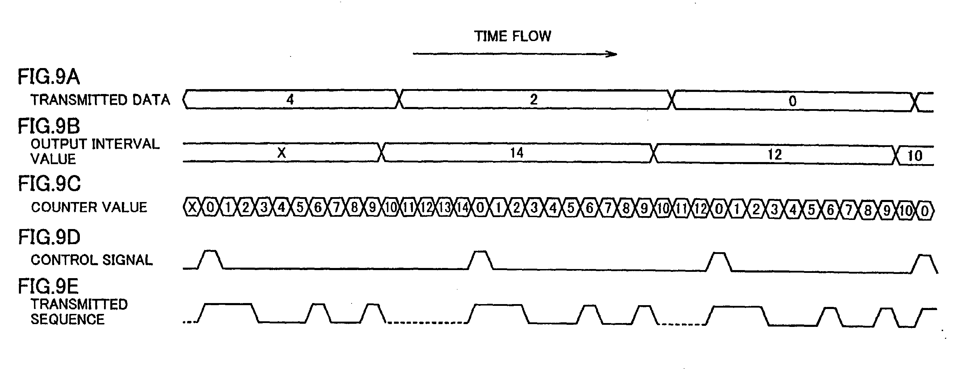

Figs. 9A to 9E are timing charts illustrating operation of the transmitter shown in Fig. 7. It is herein assumed that the transmitting section 14 sequentially transmits the bits received from the specific sequence generator 3 according to a clock. In Figs. 9B and 9C, X indicates an indeterminate value. A dashed line in a transmitted sequence code of Fig. 9E indicates a period during which nothing is transmitted from the transmitter, and indicates that the value is indeterminate. The transmitter operates according to the following procedures.
(i) It is herein assumed that the specific sequence code generator 13 outputs a specific sequence code and the control section 12 measures the time elapsed from the start of outputting the specific sequence code. It is also assumed that the specific sequence code generator 13 sequentially transmits the specific sequence code to the transmitting section 14 on a bit-by-bit basis. In response to the first data value "4" from the upper layer, the encoder 11 applies to the control section 12 an output interval value "14" indicating the timing of outputting a specific sequence corresponding to that data value. As soon as the counter value reaches "10", the control section 12 fetches the output interval value. The fact that the counter value reaches "10" herein means that the specific sequence code generator 13 finishes outputting the specific sequence code.
(ii) When the counter value of the control section 12 matches the output interval value "14" as shown in Fig. 9C, the control section 12 applies a control signal to the specific sequence code generator 13 and simultaneously resets the value of the counter 24. The control section 12 again starts measuring the time from that moment. In response to the control signal, the specific sequence code generator 13 sequentially applies the specific sequence to the transmitting section 14 on a bit-by-bit basis;
(iii) As soon as the counter value of the control section 12 reaches "10", the control section 12 fetches the output interval value "12" corresponding to the subsequent transmitted data value "2".
(iv) As in step (ii), transmission of a corresponding specific sequence is started at the timing the counter value of the control signal 12 matches the output terminal value "12". As in step (iii), as soon as the counter value of the control section 12 reaches "10", the control section 12 fetches the output interval value "10" corresponding to the subsequent transmitted value "0".
(v) Thereafter, as in step (iv), steps (ii) and (iii) are repeated for the output interval value corresponding to the subsequent transmitted value, whereby data is transmitted continuously.

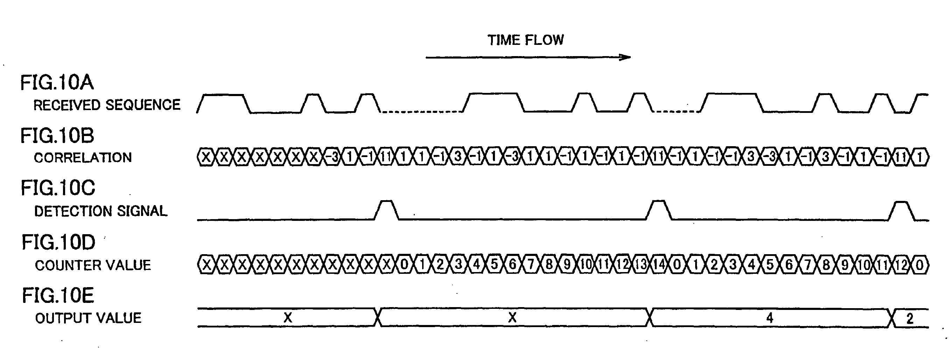

Figs. 10A to 10E are timing charts illustrating operation of the receiver in Fig. 8. It is herein assumed that the received sequence storage section 22 in Fig. 8 receives the data on a bit-by-bit basis and thus stores the most recent partial received sequence therein.
(i) As shown in Fig. 10A, the received sequence storage section 22 receives data from the empty state until the received data has the same length as that of the specific sequence code length. Thereafter, the received sequence storage section 22 applies a partial received sequence to the correlator 23 every time it receives 1 bit. As shown in FIG. 10B, the correlator 23 calculates correlation between the partial received sequence and the specific sequence. If the correlation exceeds a threshold value, the correlator 23 outputs a detection signal to the counter 24 as shown in Fig. 10C. In response to the detection signal, the counter 24 resets the counter value as shown in Fig. 10D, and starts measuring the time from that moment.
(ii) When the correlator 23 subsequently determines that the correlation exceeds the threshold value and outputs a detection signal to the counter 24, the counter 24 applies the counter value "14" to the decoder 25, and starts measuring the time again from that moment. In response to the counter value "14" from the counter 24, the decoder 25 applies the data value "4" corresponding to that time interval to the upper layer.
(iii) When the correlator 23 determines that the correlation value again exceeds the threshold value, the data value "2" calculated from the counter value "12" of the counter 24 is applied to the upper layer as in step (ii).
(iv) Thereafter, step (ii) is repeated. Thus, every time the correlator 23 generates a detection signal, the data value is calculated from the counter value, whereby the data value is continuously applied to the upper layer.

Hereinafter, a fourth embodiment will be described. In the fourth embodiment, a Barker sequence is used as a specific sequence code in order to further reduce erroneous determination caused by random bit errors in a received sequence code as compared to the third embodiment. Moreover, the transmitter has a function to transmit a specific sequence in a gap, and the receiver has a function to adaptively vary a threshold value.

Since a specific sequence must be accurately detected in a received sequence, a specific sequence must correlate poorly with a rotated sequence thereof. More specifically, a sequence having a sharp autocorrelation function must be used as a specific sequence. Therefore, the Barker sequence having such a property is herein used as a specific sequence. A pseudo-noise sequence (PN sequence) may alternatively be used as a specific sequence.

Except for case where a partial received sequence in a received sequence is equal to a Barker sequence, a gap sequence is selected so that a partial received sequence correlates poorly with a Barker sequence. As a result, the probability that an erroneous detection signal is generated due to a random bit error in the received sequence can be reduced as compared to the case where nothing is transmitted in a gap. Moreover, the fact that the two values of a single binary data sequence appear at equal frequency, that is, DC balance is maintained, is advantageous for various traffics including an optical fiber. Accordingly, a sequence having a small difference in frequency of appearance between the two values may be selected as a gap sequence.

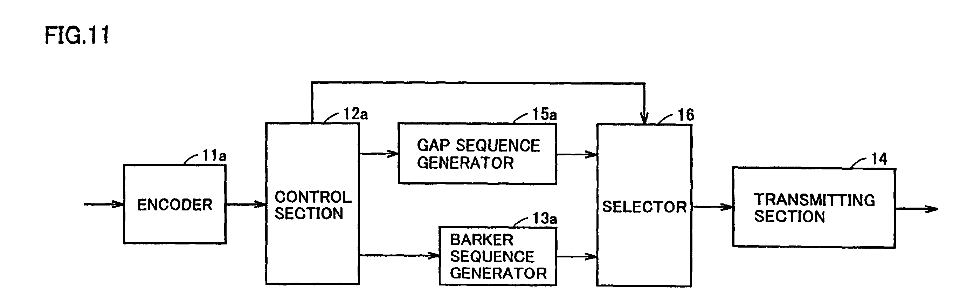

Fig. 11 is a block diagram showing the structure of a transmitter according to the fourth embodiment of the present invention. In Fig. 11, the transmitter includes an encoder 11a, a control section 12a, a Barker sequence generator 13a, a transmitting section 14, a gap sequence generator 15a, and a selector 16. The selector 16 selects either a gap sequence from the gap sequence generator 15a or a Barker sequence from the Barker sequence generator 13a according to a control signal from the control section 12a.

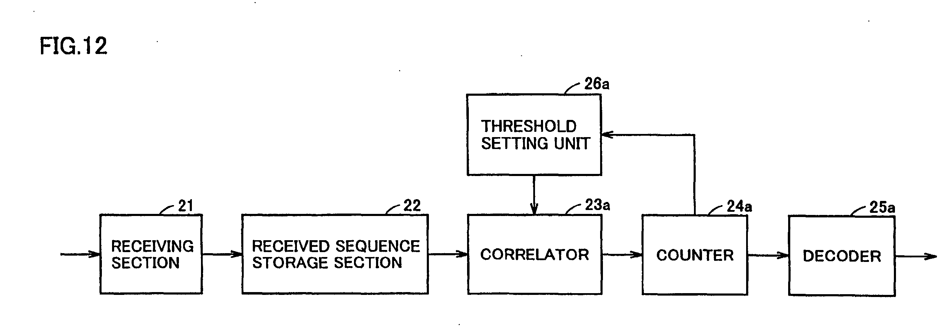

Fig. 12 is a block diagram showing the structure of a receiver according to the fourth embodiment of the present invention. In addition to the structure of the receiver in Fig. 8, the receiver in Fig. 12 further includes a threshold setting unit 26a for setting, with reference to a counter value of the counter 24a, a threshold value that is used by the correlator 23a to detect a Barker sequence.

Provided that a Barker sequence was correctly detected in the receiver of Fig. 12, the subsequent Barker sequence will not be detected in a period shorter than the Barker sequence length by 1 bit after the former Barker sequence was detected. Accordingly, in this period, the probability that a detection signal is erroneously generated can be reduced by setting the threshold value to a higher value by the threshold setting unit 26a. In the remaining period, the probability that no detection signal is generated erroneously can be reduced by setting the threshold value to a lower value.

In the case where the previous detection signal was erroneously generated, the subsequent detection signal can be generated correctly by the following method: by using the threshold setting unit 26a, the threshold value is set to a higher value or to such a value that enables detection of a Barker sequence in the period shorter than the Barker sequence length by 1 bit after detection of the previous Barker sequence.

Note that, in the case where bidirectional full-duplex communication is conducted through a single-core optical fiber using a single waveform, an error may possibly be generated due to the influence of one communication path on the other. Therefore, using different sequences as the specific sequences in the communication paths rather than using the same sequence is advantageous to reduce the rate of erroneous determination of the data. A specific Barker sequence has the lowest correlation with an inverted sequence thereof. Therefore, in the fourth embodiment, it is also possible to use a Barker sequence as a specific sequence in one communication path and to use an inverted sequence thereof as a specific sequence in the other communication path.

Moreover, by representing the data by combination of a gap length and an inverted state of a Barker sequence in the fourth embodiment, the maximum gap length required to transmit a single symbol is reduced as compared to the third and fourth embodiments, enabling an increased data transmission rate.

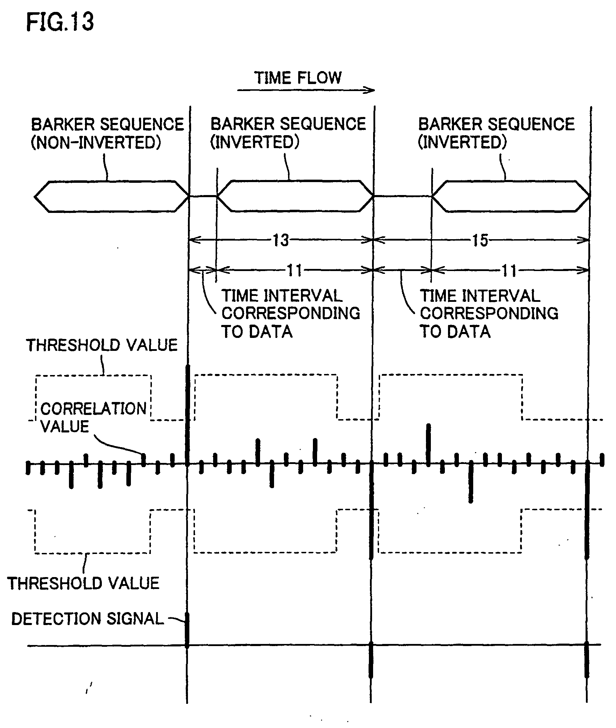

Fig. 13 shows a transmitted sequence and correlation in a received sequence in the fourth embodiment of the present invention. Fig. 13 shows a queue state that is transmitted for IEEE1394 arbitration by using an inverted state of a Barker sequence and a gap interval of 0 to 4 bits. As shown in Fig. 13, the time interval between Barker sequences and inversion/non-inversion of each Barker sequence can be detected by comparing correlation between a partial received sequence and a subject Barker sequence with a threshold value.

The Barker sequence has the following two inverted states: inverted and non-inverted states, which is equivalent to representation by 1 bit. Such representation can be realized by the following methods:
(A) The two states of a detected detection signal, +1 and -1, are represented on a binary basis; and
(B) Whether the value of a detected detection signal is equal to that of the previous detection signal or not is represented on a binary basis.

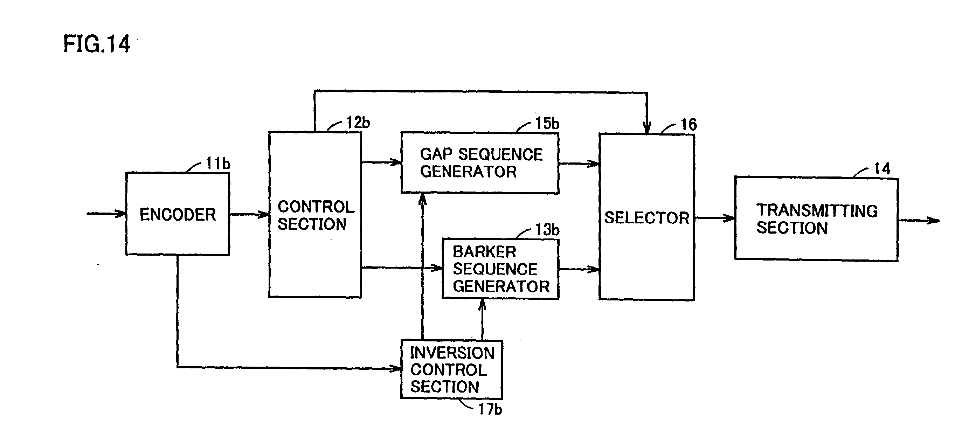

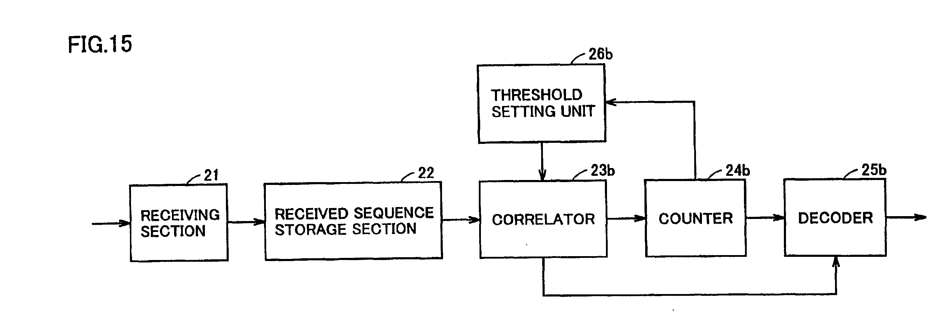

Fig. 14 is a block diagram showing a transmitter in the method (A), and Fig. 15 is a block diagram showing a receiver in the method (A).

In Fig. 14, the transmitter additionally includes an inversion control section 17b for controlling inversion of the respective outputs of the gap sequence generator 15b and the Barker sequence generator 13b based on a control signal from the encoder 11b. The structure of the transmitter is otherwise the same as that of Fig. 11.

The receiver of Fig. 15 includes as a correlator 23b an additional function to transmit a detection signal value to the decoder 25b.

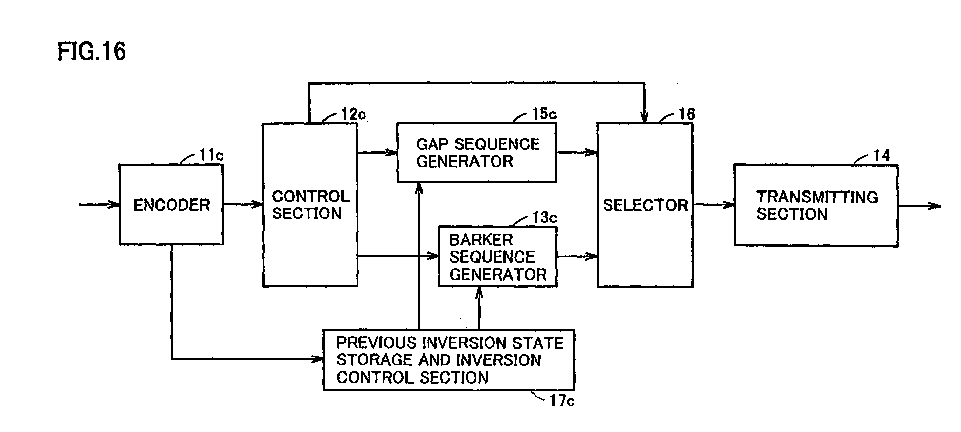

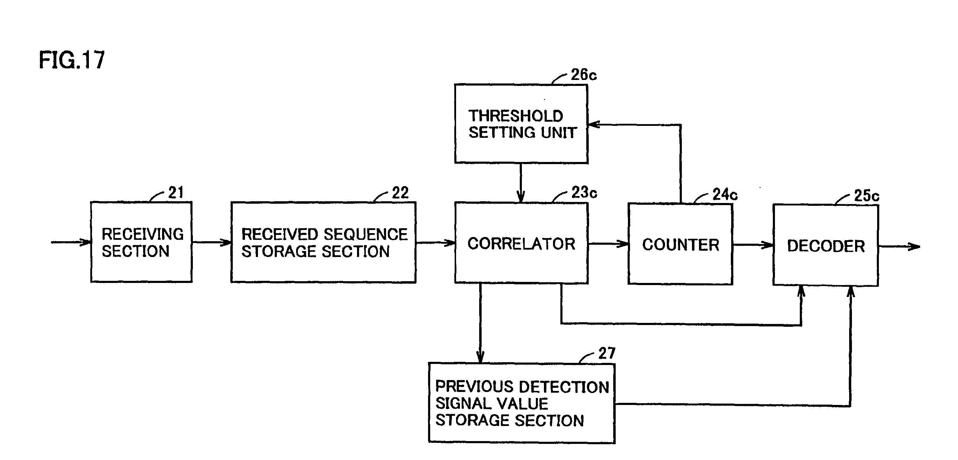

Fig. 16 is a block diagram showing a transmitter in the method (B), and Fig. 17 is a block diagram showing a receiver in the method (B). As shown in Fig. 16, the transmitter additionally includes a previous inverted state storage and inversion control section 17c for storing the inverted state of the previous Barker sequence and controlling inversion of the respective outputs of the gap sequence generator 15c and the Barker sequence generator 13c. The structure of the transmitter is otherwise the same as that in Fig. 11.

The receiver of Fig. 17 additionally includes a previous detection signal value storage section 27 for storing the value of the previous detection signal, and also includes as a correlator 23c an additional function to apply a detection signal value to the decoder 25c and the previous detection signal value storage section 27.

As is apparent from the comparison between Figs. 14 and 16 and between Figs. 15 and 17, the circuit structure in the method (A) is simpler than that in the method (B). However, the method (B) makes it possible for the bits "1" and "0" in a transmission sequence to appear with equal probability. Therefore, the method (B) is advantageous over the method (A) for optical fiber communication or the like.

Hereinafter, specific description will be given for a Barker sequence and a gap sequence, a correlation calculation method, and procedures for adaptively varying a threshold value, which are applied particularly in the method (B) in order to accurately transmit an arbitration state in a communication path in which an error is generated.

### (1) Barker sequence and gap sequence to be applied:

A Barker sequence to be applied as a specific sequence is A = 11100010010 and an inverted sequence thereof, i.e., B = 00011101101. For this Barker sequence, the following sequence is used as a gap sequence that causes poor correlation except when the Barker sequence is detected in the received sequence:
(a) When A is followed by A, 1, 11, 110, 1101 are respectively used as a 1 to 4-bit gap sequence interposed therebetween;
(b) When A is followed by B, 1, 10, 100, 1001 are respectively used as a 1 to 4-bit gap sequence interposed therebetween;
(c) When B is followed by B, 0, 00, 001, 0010 are respectively used as a 1 to 4-bit gap sequence interposed therebetween; and
(d) When B is followed by A, 0, 01, 011, 0110 are respectively used as a 1 to 4-bit gap sequence interposed therebetween.

This will now be described in more detail with reference to Fig. 15. The received sequence storage section 22 holds a received sequence having an 11-bit Barker sequence length through the receiving section 21. The correlator 23b calculates correlation between the Barker sequence and a sequence of interest to detect a Barker sequence and an inverted state thereof. The counter 24b counts the detection interval of the Barker sequence. Since the Barker sequence length is 11 bits, the decoder 25b decodes a symbol by using the detection interval of the Barker sequence received from the counter 24b minus 11 bits and the inverted state of the Barker sequence received from the correlator 23b.

Note that the specific sequence and the gap sequence are not limited to those described above. Any specific sequence and gap sequence may be used as long as a partial received sequence including the gap sequence correlates poorly with the specific sequence and the difference in frequency of appearance between "1" and "0" satisfies the requirement for a communication path. A longer specific sequence may be used in a communication path having a high error-generation rate.

In nine of ten types of combinations of two Barker sequences and a gap sequence inserted therebetween, the difference in frequency of appearance between "0" and "1" within each combination is within 1. In the remaining one type of combination, the difference in frequency of appearance between "0" and "1" is 2. Therefore, these combinations are suitable for optical fiber communication. If a combination having every bit "0" and "1" inverted is equal to another combination, these combinations represent the same data.

In order to simplify the circuit of the transmitter for generating a gap sequence, the same sequence as that of (a) may be applied as a gap sequence used in (b). Alternatively, the same sequence as that of (c) may be applied as a gap sequence used in (d).

### (2) Correlation calculation method and procedures for adaptively varying a threshold value:

The number of corresponding bits having the same value minus the number of corresponding bits having different values in a partial received sequence and a Barker sequence is used as correlation therebetween. By using this correlation calculation method, the threshold value used in the receiving device is set to 10 and -10 in the period shorter than the Barker sequence length by 1 bit after generation of a detection signal, and is otherwise set to 6 and -6.

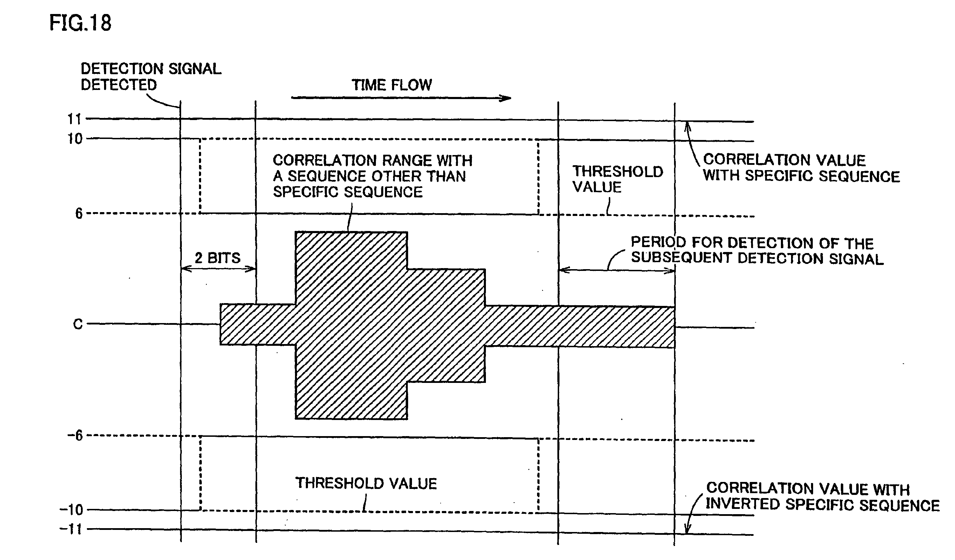

Fig. 18 shows a change in correlation and a corresponding threshold value for a given sequence. When the above Barker sequence and gap sequence are used, correlation of an error-free transmitted sequence can be defined as the range shown in Fig. 18. By varying the threshold value by the method described in (2), the threshold value is set to the value shown in Fig. 18 relative to the correlation of the error-free sequence.

The correlation value varies by 2 every time a 1-bit error is generated. Therefore, when a 2-bit error is generated, the correlation value varies by 4. Accordingly, by varying the threshold as described above, a detection signal can be prevented from being generated erroneously or not being generated erroneously even if any 11-bit sequence extracted from the received sequence has an error of 2 bits or less. Even when the threshold value is set to a higher value, it is possible to detect an error-free Barker sequence. Accordingly, even if a detection signal is erroneously generated, the subsequent detection signal can be generated correctly.

In addition to the above ideas (1) and (2), the following ideas can further be applied for mounting of the circuitry: (3) allocation of a specific data sequence to a preamble; and (4) pipelining of a correlation detection circuit.

### (3) Allocation of a specific data sequence to a preamble:

Nine types of states are transmitted in arbitration of IEEE Std 1394. Therefore, in the data communication method of the present embodiment capable of transmitting ten types of symbols, a single type of symbol is not used. Accordingly, this type of data sequence that is not used in arbitration is used as a preamble that is transmitted before arbitration of IEEE Std 1394 is started. The preamble is transmitted in order to stabilize a transmitting/receiving circuit.

In this case, as a data sequence used as a preamble, Barker sequences having the same inverted state are successively transmitted without a gap. This data sequence is a combination whose difference in frequency of appearance between "0" and "1" is 2, and therefore is not suitable for normal state transmission. Therefore, this data sequence is used as a preamble.

In this case, at the timing a preamble may be transmitted, that is, in the period before full-duplex communication is started, the threshold value of correlation between a partial received sequence and a Barker sequence is set to +6, -6.

### (4) Pipelining of a correlation detection circuit:

The correlation detection circuit detects a Barker sequence by comparing correlation with the threshold value every time it receives 1 bit of the received sequence. Moreover, the threshold value is varied based on the detection result. These two operations are divided into two serial processing stages for pipelining. More specifically, the step of comparing correlation with the threshold value and the step of varying the threshold value based on the detection result are conducted in parallel. As a result, these steps can be separately conducted within a period of 2 bits. This reduces the requirement for the processing speed of the circuit for conducting the steps of comparing correlation with the threshold value and varying the threshold value based on the detection result.

By such pipelining, the delay from the input is applied until the detection signal is output corresponds to 2 bits. Accordingly, the threshold value cannot be varied right after the Barker sequence is received, but is varied after the delay of 2 bits. Based on (1), correlation between the partial received sequence and the Barker sequence is poor during 2 bits after generation of the detection signal, as shown in Fig. 18. Therefore, the threshold value may be increased after 2 bits rather than right after generation of the detection signal. In this case as well, communication can be conducted accurately even if any 2-bit error is generated in successive 11 bits.

The use of the above communication method enables accurate communication even if any 2-bit error is generated in successive 11 bits in the received sequence. If the error rate is lower than that, a sequence shorter than the Barker sequence used in the above embodiment may be used as a specific sequence in order to improve the data transmission rate.

In this embodiment, in order to accurately conduct communication even if any 1-bit error is generated in successive 7 bits in the received sequence, the same ideas as those in the above embodiment can be applied using a 7-bit Barker sequence as a specific sequence.

Hereinafter, (1) barker sequence and gap sequence to be applied and (2) procedures for adaptively varying a threshold value will be described.

### (1) Barker sequence and gap sequence to be applied:

A Barker sequence to be applied as a specific sequence is A = 1011000 and an inverted sequence thereof, i.e., B = 0100111. For this Barker sequence, the following sequence is used as a gap sequence that causes poor correlation except when the Barker sequence is detected in the received sequence:
(a) When A is followed by A, 1, 11, 111, 1110 are respectively used as a 1 to 4-bit gap sequence interposed therebetween;
(b) When A is followed by B, 0, 00, 000, 0001 are respectively used as a 1 to 4-bit gap sequence interposed therebetween;
(c) When B is followed by B, 0, 00, 000, 0001 are respectively used as a 1 to 4-bit gap sequence interposed therebetween; and
(d) When B is followed by A, 1, 11, 111, 1110 are respectively used as a 1 to 4-bit gap sequence interposed therebetween.

This will now be described in more detail with reference to Fig. 15. The received sequence storage section 22 holds a received sequence having a 7-bit Barker sequence length through the receiving section 21. The correlator 23c calculates correlation between the Barker sequence and a sequence of interest to detect a Barker sequence and an inverted state thereof. The counter 24c counts the detection interval of the Barker sequence. Since the Barker sequence length is 7 bits, the decoder 25c decodes a symbol by using the detection interval of the Barker sequence received from the counter 24c minus 7 bits and the inverted state of the Barker sequence received from the correlator 23c.

### (2) Procedures for adaptively varying a threshold value:

A threshold value used in the receiving device is set to 6 and -6 in the period shorter than the Barker sequence length by 1 bit after generation of a detection signal, and is otherwise set to 4 and -4. In the preamble period, the threshold value is set to 4 and -4.

As described above, according to the embodiments of the present invention, accurate communication can be realized as a communication method in a serial communication path with a high error-generation rate without requiring a separate synchronization mechanism. Therefore, the receiver for receiving the data can be reduced in size. Moreover, since a Barker sequence or PN sequence having a spread frequency spectrum is used as a specific sequence, electromagnetic noise generated during communication will hardly affect other equipment.

Moreover, the embodiments of the present invention are particularly useful when there are only a small number of types of symbols to be transmitted. Therefore, the embodiments of the present invention are suitable for arbitration of IEEE Std 1394 conducted by transmitting nine, types of states between devices. In other words, according to the embodiments of the present invention, arbitration can be conducted in the full-duplex bidirectional communication having a high error-generation rate in a communication path without using an extremely expensive apparatus. As a result, high-speed serial bus communication according to IEEE Std 1394 can be implemented by using a single waveform and a single-core optical fiber.

### Industrial Applicability

In order to implement bidirectional transmission by using a single-core optical fiber, the present invention is applied to a bidirectional data communication system for transmitting an arbitration signal in a full-duplex transmission mode including an error correcting function and transmitting data packets in a half-duplex transmission mode.

## Claims

1. A data communication method, wherein data to be transmitted is represented by a time interval, and said data represented by the time interval is interposed between first specific sequences for transmission, said first specific sequence having a sharp autocorrelation function.

2. The data communication method according to claim 1, wherein said first specific sequence having a sharp autocorrelation function and a second specific sequence having a specific relation with said first specific sequence are used as a sequence of said data represented by the time interval.

3. The data communication method according to claim 1, wherein a binary sequence is used as said first specific sequence and said second specific sequence, and said time interval is set on a bit basis.

4. The data communication method according to claim 1, wherein a specific sequence formed from a combination of a first logic and a second logic different from said first logic, and a code corresponding to said specific sequence having the first logic and the second logic inverted are used as said first specific sequence, and said specific sequence, an inverted sequence thereof, and said time interval representing said data to be transmitted are transmitted in combination.

5. The data communication method according to claim 3, two communication paths are included for bidirectional communication, said first specific sequence is used in one communication path, and a code corresponding to said first specific sequence having each logic inverted is used in the other communication path.

6. The data communication method according to claim 3, wherein a pseudo-noise sequence (PN code) is used as said first specific sequence.

7. The data communication method according to claim 1, wherein a Barker sequence is used as said first specific sequence.

8. The data communication method according to claim 3, wherein the number of corresponding bits having a same value minus the number of corresponding bits having different values in a partial received sequence and said first specific sequence is used as correlation therebetween, said partial received sequence being obtained by extracting from a received sequence a continuous part having a same length as that of said first specific sequence.

9. The data communication method according to claim 7, wherein
A = 11100010010 and a sequence having each bit of A inverted, i.e., B = 00011101101, are used as said first specific sequence,
when A is followed by A, 1, 11, 110, 1101 are partially or entirely used as a 1 to 4-bit second specific sequence interposed therebetween,
when A is followed by B, 1, 10, 100, 1001 are partially or entirely used as a 1 to 4-bit second specific sequence interposed therebetween,
when B is followed by B, 0, 00, 001, 0010 are partially or entirely used as a 1 to 4-bit second specific sequence interposed therebetween, and
when B is followed by A, 0, 01, 011, 0110 are partially or entirely used, whereby ten types of information are transmitted.

10. The data communication method according to claim 7, wherein
A = 1011000 and a sequence having each bit of A inverted, i.e., B = 0100111, are used as said first specific sequence,
when A is followed by A, 1, 11, 111, 1110 are partially or entirely used as a 1 to 4-bit second specific sequence interposed therebetween,
when A is followed by B, 0, 00, 000, 0001 are partially or entirely used as a 1 to 4-bit second specific sequence interposed therebetween,
when B is followed by B, 0, 00, 000, 0001 are partially or entirely used as a 1 to 4-bit second specific sequence interposed therebetween, and
when B is followed by A, 1, 11, 111, 1110 are partially or entirely used, whereby ten types of information are transmitted.

11. A data communication system for representing data to be transmitted by a time interval, and interposing said data represented by the time interval between first specific sequences for transmission between a transmitter and a receiver, said first specific sequence having a sharp autocorrelation function, wherein
said transmitter includes
a converting means for converting said data to be transmitted into said time interval,
a storage means for storing said first specific sequence, and
a transmitting means for interposing said time interval obtained by said converting means between said first specific sequences stored in said storage means for transmission, and
said receiver includes
a detection signal generating means for detecting said first specific sequence in a received sequence by detecting whether correlation between a partial received sequence and said first specific sequence exceeds a threshold value or not, and generating a detection signal at a corresponding timing, said partial received sequence being obtained by extracting from said received sequence a continuous part having a same length as that of said first specific sequence, and
a restoring means for restoring data based on a time interval between detection signals from said detection signal generating means minus the length of said first specific sequence.

12. A bidirectional data communication system for transmitting in combination a time interval representing data to be transmitted, a first specific sequence having a sharp autocorrelation function, and a second specific sequence having a specific relation with said first specific sequence, comprising two communication paths for bidirectional communication, wherein said first specific sequence and said second specific sequence are used in one communication path, and said first specific sequence and said second specific sequence each having a logic inverted are used in the other communication path.

13. A data transmitting device for representing data to be transmitted by a time interval and interposing said data represented by the time interval between first specific sequences for transmission, said first specific sequence having a sharp autocorrelation function, comprising:
a converting means for converting data to be transmitted into said time interval;
a storage means for storing said first specific sequence; and
a transmitting means for interposing said time interval obtained by said converting means between said first specific sequences stored in said storage means for transmission.

14. A data receiving device for receiving a received sequence, said received sequence being formed from a time interval representing data to be transmitted and first specific sequences interposing said time interval therebetween, said first specific sequence having a sharp autocorrelation function, said data receiving device comprising:
a detection signal generating means for detecting said first specific sequence in said received sequence by detecting whether correlation between a partial received sequence and said first specific sequence exceeds a threshold value or not, and generating a detection signal at a corresponding timing, said partial received sequence being obtained by extracting from said received sequence a continuous part having a same length as that of said first specific sequence; and
a restoring means for restoring data based on a time interval between detection signals from said detection signal generating means minus the length of said first specific sequence.

15. The data receiving device according to claim 14, further comprising a means for varying said threshold value.

16. The data receiving device according to claim 15, wherein
the number of corresponding bits having a same value minus the number of corresponding bits having different values in a partial received sequence and said first specific sequence is used as correlation therebetween, said partial received sequence being obtained by extracting from said received sequence a continuous part having a same length as that of said first specific sequence,
A = 11100010010 and a sequence having each bit of A inverted, i.e., B = 00011101101, are used as said first specific sequence,
when A is followed by A, 1, 11, 110, 1101 are partially or entirely used as a 1 to 4-bit second specific sequence interposed therebetween,
when A is followed by B, 1, 10, 100, 1001 are partially or entirely used as a 1 to 4-bit second specific sequence interposed therebetween,
when B is followed by B, 0, 00, 001, 0010 are partially or entirely used as a 1 to 4-bit second specific sequence interposed therebetween, and
when B is followed by A, 0, 01, 011, 0110 are partially or entirely used, and
said threshold value is set to 10 and -10 in a period shorter than the length of said first specific sequence by 1 bit after generation of said detection signal, and is otherwise set to 6 and -6.

17. The data receiving device according to claim 15, wherein
the number of corresponding bits having a same value minus the number of corresponding bits having different values in a partial received sequence and said first specific sequence is used as correlation therebetween, said partial received sequence being obtained by extracting from said received sequence a continuous part having a same length as that of said first specific sequence,
A = 1011000 and a sequence having each bit of A inverted, i.e., B = 0100111, are used as said first specific sequence,
when A is followed by A, 1, 11, 111, 1110 are used as a 1 to 4-bit second specific sequence interposed therebetween,
when A is followed by B, 0, 00, 000, 0001 are used as a 1 to 4-bit second specific sequence interposed therebetween,
when B is followed by B, 0, 00, 000, 0001 are used as a 1 to 4-bit second specific sequence interposed therebetween, and
when B is followed by A, 1, 11, 111, 1110 are used, whereby ten types of information are transmitted, and
said threshold value is set to 6 and -6 in a period shorter than the length of said first specific sequence by 1 bit after generation of said detection signal, and is otherwise set to 4 and -4.

18. A bidirectional data communication system including at least two terminal devices connected on a one-to-one basis through a transmission path of a single-core optical fiber, for transmitting and receiving data, wherein each of said terminal devices includes
a full-duplex encoding means for conducting encoding operation in a full-duplex transmission mode in which input packet data is always transmitted and received simultaneously,
a half-duplex encoding means for conducting encoding operation in a half-duplex transmission mode in which a transmission direction (transmission and reception) of said input packet data is switched with time,
a selector for selecting an output of said full-duplex encoding mean and an output of said half-duplex encoding means,
a transmitting means for transmitting an output of said selector to one terminal device through said optical fiber,
a communication control means for switching said selector and applying an input arbitration signal and input packet data to said full-duplex encoding means and said half-duplex encoding means to control an output to the other terminal device,
an upper layer for outputting an arbitration signal and packet data to said communication control means according to a protocol and receiving an arbitration signal and packet data from said communication control means,
a receiving means for receiving information transmitted from the other terminal device through said optical fiber,
a full-duplex decoding means for decoding an arbitration signal and packet data based on said information received by said receiving means for output to said communication control means, and
a half-duplex decoding means for decoding an arbitration signal and packet data based on said information received by said receiving means for output to said communication control means, wherein
full-duplex communication is used for arbitration of transmission, and half-duplex communication is used for data transmission.

19. The bidirectional data communication system according to claim 18, wherein said full-duplex decoding means has an error correcting function that works only in full-duplex transmission, whereby an error rate resulting from electromagnetic coupling noise is improved.

20. The bidirectional data communication system according to claim 1, wherein said communication control means reduces a handled frequency by reducing a transmission rate only in said full-duplex transmission, whereby an error rate is improved.

21. The bidirectional data communication system according to claim 1, wherein said communication control means causes said one terminal device to transmit continuously or intermittently and the other terminal'device to transmit intermittently in said full-duplex transmission, whereby power consumption for transmission of the intermittently transmitting terminal device is reduced.

22. The bidirectional data communication system according to claim 1, wherein said terminal devices use different light wavelengths for transmission so as to prevent a signal transmitted from the terminal device itself from being mixed with a signal received by that terminal device, whereby an error rate is improved.

23. The bidirectional data communication system according to claim 1, wherein said terminal devices use different modulation methods for transmission so as to enable full-duplex transmission through a single optical fiber.

24. The bidirectional data communication system according to claim 1, wherein said terminal devices enable transmission according to IEEE1394 on said transmission path.
